# EUROPEAN PATENT SPECIFICATION

(11) **EP 4 372 966 B1**
(45) Date of publication and mention of the grant of the patent: **21.01.2026**
(21) Application number: 23206303.2
(22) Date of filing: 27.10.2023
(51) Int. Cl.: H02K 1/20, H02K 9/19

(54) **STATOR HAVING COOLING FLOW PATH AND MOTOR INCLUDING THE SAME**
STATOR MIT KÜHLKANÄLEN UND ENTSPRECHENDER MOTOR
STATOR AYANT UN TRAJET D'ÉCOULEMENT DE REFROIDISSEMENT ET MOTEUR LE COMPRENANT

(30) Priority: 21.11.2022 KR 20220156106
(43) Date of publication of application: 22.05.2024
(73) Proprietor: Hyundai Mobis Co., Ltd., Gangnam-gu Seoul 06141 (KR)
(72) Inventor: KIM, Goon Chul, Yongin-si, Gyeonggi-do 16891 (KR)
(74) Representative: Frenkel, Matthias Alexander

(56) References cited:
- WO-A1-2022/110895
- CN-A- 115 021 439

## Description

### TECHNICAL FIELD

The following disclosure relates to a stator having a cooling flow path and a motor including the stator, and in particular, to a motor having a simple structure, while having cooling efficiency similar to that of the related art or improved cooling efficiency.

### BACKGROUND

Motors are energy conversion devices converting electrical energy into magnetic energy and magnetic energy into mechanical energy. Energy conversion loss occurs in each energy conversion process, and the loss appears in the form of heat and sound. Heat in motors increases resistance of a coil to which current is applied, and in the case of a motor using a permanent magnet, heat slows down magnetic flux density of the permanent magnet, which eventually degrades power. In addition, heat generated from motors not only deteriorates insulation performance of the motors by affecting corrosion or insulation performance of insulators, but also shortens lifespan, and thus, an appropriate cooling structure has to be applied to motors to prevent such problems.

In the related art motor, a flow path is disposed on an outer circumferential surface of the core to effectively cool heat generated by the motor. This structure requires a cooling guide, a separate structure allowing cooling oil discharged along the outer circumferential surface of the core to be directly sprayed to a coil, but this method lowers assembly and economic efficiency and increases the volume of the motor in that the separate structure is required.

[Related art document]

From WO 2022/110895 a stator is known.

WO 2022/110895 discloses:
A stator comprising: a core including a yoke having an annular shape, a teeth extending inwardly from the yoke and radially disposed, and a shoe disposed at an end of each tooth; and a cooling flow path disposed inside the core, wherein at least one cooling fluid inlet is disposed along an outer circumferential surface of the core, and at least one cooling fluid outlet connected to the at least one cooling fluid inlet, wherein the core includes two first parts and a second part disposed between the two first parts, each of two first parts is disposed by stacking a plurality of first steel plates in which holes are disposed at positions corresponding to the at least one cooling fluid outlet, the second part has a groove disposed in a position corresponding to the at least one cooling fluid inlet, and the groove is disposed from a position corresponding to the at least one cooling fluid outlet to a position corresponding to the outer circumferential surface of the core, wherein the cooling fluid discharged through the cooling fluid outlet is directly sprayed to the coil to contact the coil to directly cool the coil.

### [Patent document]

Korean Application Publication No. 10-2022-0127556 (Motor and motor cooling system, published on September 20, 2022)

### SUMMARY

An embodiment of the present invention is directed to providing a stator having a cooling flow path of a simple structure and a motor including the same, capable of directly spraying cooling oil to a coil included in a motor even without a cooling guide, thereby improving assemblability and economic efficiency and reducing the size of the motor.

In one general aspect, a stator includes: a core including an annular yoke, a plurality of radially disposed teeth extending inwardly from the yoke, and a shoe disposed at an end of the tooth; and a cooling flow path disposed inside the core, wherein at least one inlet of cooling fluid is disposed along an outer circumferential surface of the core, and at least one outlet of cooling fluid connected to the at least one cooling fluid inlet is disposed in the yoke or the tooth portion in an upper surface of the core.

An outer flow path recessed in an annular shape, through which cooling fluid is injected and circulated, is disposed in a portion of the outer circumferential surface of the core in which the inlet is disposed.

The stator may further include: a partition disposed in the outer flow path to block a portion of the outer flow path and limiting a flow direction of the cooling fluid in the outer flow path.

The core includes two first parts and a second part disposed between the first parts, the first part is disposed by stacking a plurality of first steel plates in which holes are disposed at positions corresponding to the outlet, the second part has a groove disposed in a position corresponding to the inlet and is disposed by stacking a plurality of second steel plates having a diameter less than a diameter of the first steel plate, and the groove is disposed from a position corresponding to the outlet to a position corresponding to the outer circumferential surface of the core.

The core may include two first parts and a second part disposed between the first parts, the first part may be disposed by stacking a plurality of first steel plates in which holes are disposed at positions corresponding to the outlet, the second part may have a groove formed in a position corresponding to the inlet and is disposed by stacking a plurality of second steel plates having a diameter less than a diameter of the first steel plate, a portion of an outer surface of the second steel plate corresponding to the partition may protrude, and the groove may be disposed from a position corresponding to the outlet to a position corresponding to the outer circumferential surface of the core.

The tooth may have a width decreasing inwardly, and a width of a portion in which the outlet is disposed may be equal to or greater than a sum of the width of the outlet and the width of an inner end of the tooth.

In another general aspect, a motor includes: the stator; a housing having an injection port for cooling fluid connected to the outer flow path disposed on the outer circumferential surface of the core of the stator; and a cooling unit injecting cooling fluid into the injection port.

The stator may include a partition disposed in the outer flow path to limit a flow direction of cooling water in the outer flow path, wherein the partition may be disposed in a position adjacent to the injection port in the outer flow path.

The housing may further include: a main flow path to which the injection port and the cooling unit are connected; and an auxiliary injection port branched from the main flow path and connected to the outer flow path between the partition and the injection port, among both ends of the injection port.

The stator may include a partition disposed in the outer flow path to limit a flow direction of cooling water in the outer flow path, a plurality of partitions may be disposed in positions spaced apart from each other by a predetermined distance to divide the outer flow path into a plurality of flow paths, and the injection port may be disposed in a number corresponding to the number of the partitions, and the injection ports are disposed in positions adjacent to the partitions, respectively.

n partitions may be disposed in the outer flow path, and an angle between two adjacent partitions may be 360/n degrees.

Other features and aspects will be apparent from the following detailed description, the drawings, and the claims.

### BRIEF DESCRIPTION OF THE DRAWINGS

FIG. 1 is a perspective view of a stator according to an embodiment of the present invention;
FIG. 2 is a cross-sectional view of a stator showing flow of a cooling fluid in a stator according to an embodiment of the present invention;
FIG. 3 is an exploded perspective view of a stator according to an embodiment of the present invention;
FIG. 4 is a plan view of a first steel plate of a stator according to an embodiment of the present invention;
FIG. 5 is a plan view of a second steel plate of a stator according to an embodiment of the present invention;
FIG. 6 is a comparison of diameters of a first steel plate and a second steel plate of a stator according to an embodiment of the present invention;
FIG. 7 is a partially enlarged view of FIG. 4;
FIG. 8 is a schematic cross-sectional view of a motor according to an embodiment of the present invention; and
FIG. 9 is a schematic cross-sectional view of a motor according to another embodiment of the present invention.

### DETAILED DESCRIPTION OF EMBODIMENTS

The advantages, features and aspects of the present invention will become apparent from the following description of the embodiments with reference to the accompanying drawings, which is set forth hereinafter. The invention will now be described with reference to the accompanying drawings, in which embodiments of the invention are shown. The same reference numerals indicated in the drawings refer to similar elements throughout.

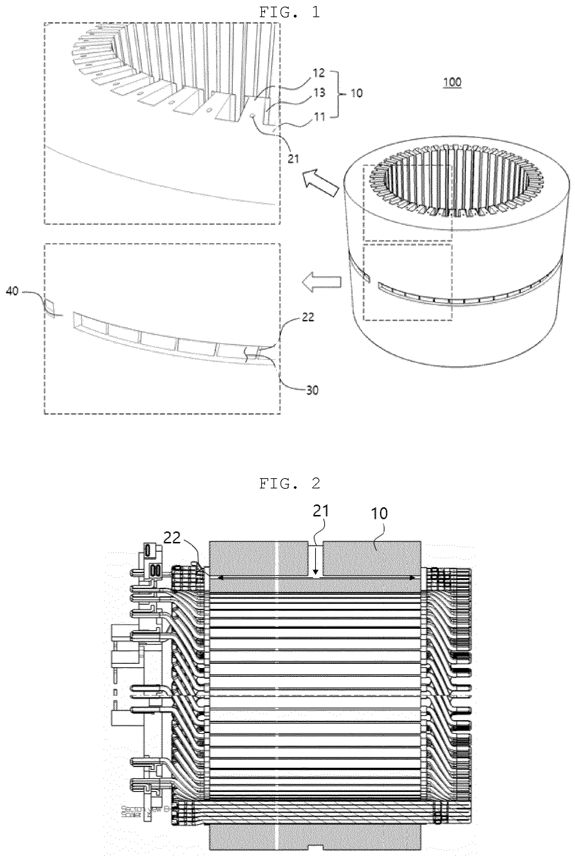

FIG. 1 is a perspective view of a stator according to an embodiment of the present invention.

A stator 100 according to an embodiment of the present invention is a stator applied to a motor and may include a core 10 and a cooling flow path (not shown).

As shown in FIG. 1, a core 10 is a portion constituting an exterior of the stator 100 according to an embodiment of the present invention, and includes a yoke 11, a tooth 12, and a shoe 13.

The yoke 11 is a kind of tubular shape having an annular cross section. The tooth 12 extends inwardly from an inner circumferential surface of the yoke 11, and the shoe 13 is a portion widening from an inner end of the tooth 12. Although not shown in the drawing, in the motor to which the stator according to the present invention is applied, a coil is wound around the tooth 12.

The cooling flow path is a kind of flow path disposed inside the core 10. A cooling fluid flows in the cooling flow path. An inlet 22 and an outlet 21 may be disposed in the core 10. The cooling fluid used in the motor may largely include cooling water and cooling oil, and the cooling fluid used in the present invention may be cooling oil.

As shown in FIG. 1, a plurality of inlets 22 may be disposed along an outer circumferential surface of the core 10, and the outlet 21 may be disposed on an upper surface of the tooth 12 included in the core 10. However, in the present invention, a position in which the outlet 21 is disposed is not limited to the tooth 12, and the outlet 21 may be disposed in a portion of the yoke 11 adjacent to the tooth 12 in some cases.

On an outer circumferential surface of the core 10, an outer flow path 30 is disposed in an annular shape and is more recessed than other portions. The inlet 22 of the cooling flow path described above may be disposed in the outer flow path 30. In the motor to which the present invention is applied, the cooling unit injects the cooling fluid toward the inlet 22 through the outer flow path 30. The cooling fluid injected through the inlet 22 flows along the cooling flow path disposed inside the core 10 and is discharged through the outlet 21. In the motor to which the present invention is applied, a coil is disposed on one side of the outlet 21. Therefore, the cooling fluid discharged through the outlet 21 is directly sprayed to the coil to contact the coil to directly cool the coil. According to the present invention, the cooling flow path may be disposed inside the core 10 and the cooling fluid may be sprayed toward the coil without using a separate cooling guide by adjusting a position of the outlet 21, thereby implementing a motor including a simpler cooling structure. In addition, compared to the related art motor in which a flow path is disposed on the outer circumferential surface of the core, since the cooling flow path is located inside the core, an outer diameter of the core 10 may be reduced by the size of the flow path applied to the outer circumferential surface of the related art, thereby reducing costs and the size of the motor. In addition, a cooling portion may be easily adjusted using a method of adjusting the position of the outlet 21 during design.

Although not shown in FIG. 1, the cooling flow path disposed inside the core 10 may extend to a certain extent in a direction perpendicular to the surface in which the inlet 22 is disposed, that is, in a direction of a rotational axis of the core 10, and then be bent toward the outlet 21 from the portion in which the outlet 21 is located. That is, the cooling flow path disposed inside the core 10 may have an L-shape connecting the inlet 22 to the outlet 21. However, in the present invention, the cooling flow path is not limited to the L-shape, and in an embodiment, the portion of the cooling flow path which is bent in the L-shape may be bent in a diagonal direction or may be disposed in a curved shape to reduce flow resistance of the cooling fluid in the cooling flow path disposed inside the core 10.

As shown in FIG. 1, the stator according to an embodiment of the present invention may further include a partition 40 disposed in the outer flow path 30.

The partition 40 is disposed in the outer flow path 30 to block a portion of the outer flow path 30 and restricts a flow direction of the cooling fluid flowing through the outer flow path 30. A plurality of partitions 40 may be disposed as needed, but only a single partition may be disposed in the stator according to an embodiment of the present invention. A process of restricting a specific flow direction of the cooling fluid due to the partition 40 will be described below.

FIG. 2 is a cross-sectional view of a stator showing flow of a cooling fluid in a stator according to an embodiment of the present invention.

As shown in FIG. 2, the cooling fluid injected through the inlet 22 is discharged toward the coil from the outlet 21 to cool the coil.

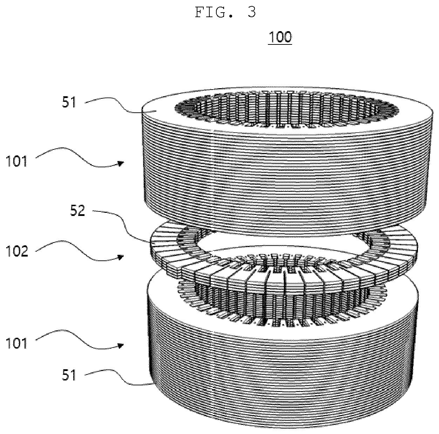

FIG. 3 is an exploded perspective view of a stator according to an embodiment of the present invention.

As shown in FIG. 3, the stator 100 according to an embodiment of the present invention may include two first parts 101 and a second part 102 located between two first parts 101.

The first part 101 and the second part 102 may be disposed by stacking a plurality of steel plates, like a method of forming a stator of a general motor, and a steel plate constituting the first part 101 is referred to as a first steel plate 51, and a steel plate constituting the second part 102 is referred to as a second steel plate 52.

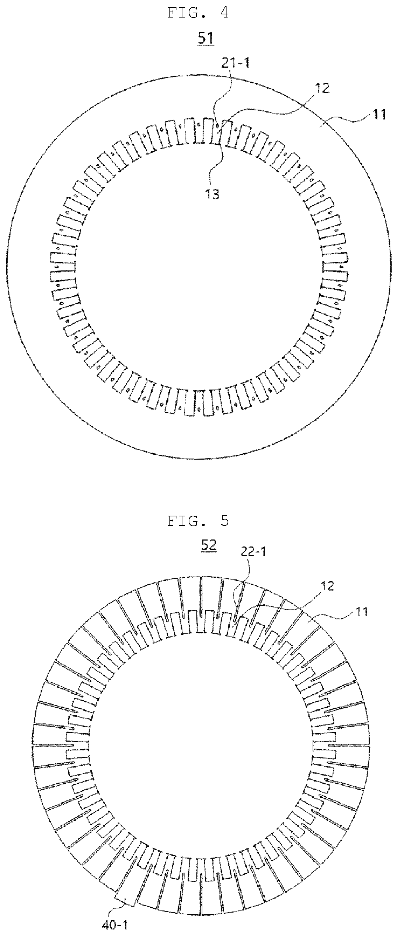

FIG. 4 is a plan view of a first steel plate of a stator according to an embodiment of the present invention.

As shown in FIG. 4, a first steel plate 51 of the stator according to an embodiment of the present invention forms a portion except for a portion in which the outer flow path 30 is disposed. The first steel plate 51 may include the yoke 11, the tooth 12, and the shoe 13 of the core 10 described above, and a hole 21-1 is disposed in a position corresponding to the outlet 21. That is, a portion of the cooling flow path connected to the outlet 21 may be disposed through the hole 21-1 of the first steel plates 51 stacked in one direction.

FIG. 5 is a plan view of a second steel plate of a stator according to an embodiment of the present invention.

As shown in FIG. 5, a second steel plate 52 of the stator according to an embodiment of the present invention forms a portion in which the outer flow path 30 is disposed. The second steel plate 52 also includes the yoke 11, the tooth 12, and the shoe 13, and a groove 22-1 is disposed in a position corresponding to the inlet 22. The groove 22-1 is disposed to extend from a position corresponding to the hole 21-1 to an outer circumferential surface of the second steel plate 52 in a radial direction. That is, when the first steel plate 51 and the second steel plate 52 are stacked on top of each other, an inner end portion of the groove 22-1 overlaps the hole 21-1, and a flow path disposed by the groove 22-1 and a flow path disposed by the hole 21-1 are connected to each other to form a cooling flow path.

As shown in FIG. 5, a portion of the outer circumferential surface of the second steel plate 52 protrudes outwardly, which is referred to as a protrusion 40-1. The protrusion 40-1 is disposed in a position corresponding to the partition 40, and when a plurality of second steel plates 52 are stacked, the stacked protrusions 40-1 form the partition 40.

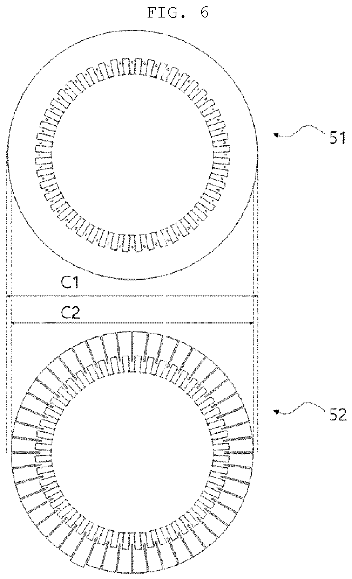

FIG. 6 shows comparison of diameters of the first steel plate 51 and the second steel plate 52 of the stator according to an embodiment of the present invention.

As shown in FIG. 6, a diameter C1 of the first steel plate 51 is greater than a diameter C2 of the second steel plate 52. This is because the second steel plate 52 has the outer flow path 30 disposed to be recessed in an annular shape on the outer circumferential surface of the core 10. That is, through a difference between the diameters of the first steel plate 51 and the second steel plate 52, the outer flow path 30 is disposed by two facing surfaces of the first part 101 spaced apart from each other by a certain distance and the outer circumferential surface of the second steel plate 52.

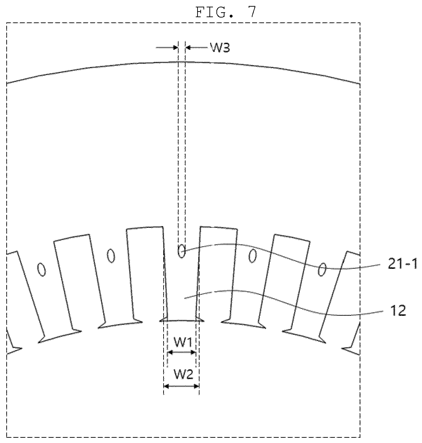

FIG. 7 is a partially enlarged view of FIG. 4.

As shown in FIG. 7, the tooth 12 may have a width decreasing inwardly. In this case, a width W1 of a portion in which the hole 21-1 is disposed may be a value equal to or greater than the sum of W2, a width of an inner end of the tooth 12, and W3, a width of the hole 21-1 constituting the cooling flow path in W2. This is to limit the shape including the width of the tooth 12 in order to prevent saturation of magnetic flux density of the core 10.

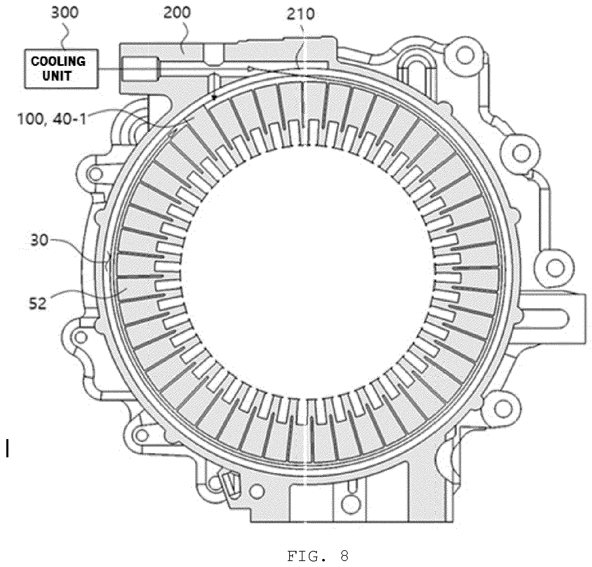

FIG. 8 is a schematic cross-sectional view of a motor according to an embodiment of the present invention.

As shown in FIG. 8, a motor according to an embodiment of the present invention includes the stator 100, the housing 200, and the cooling unit 300 described above.

In FIG. 8, since the stator 100 is shown in cross-section, the second steel plate 52 is shown. As shown in FIG. 8, the housing 200 accommodates the stator 100 and has an injection port 210 connected to the outer flow path 30 disposed on the outer circumferential surface of the core 10 of the stator 100.

The cooling unit 300 is a device for injecting a cooling fluid into the injection port 210 and may include a device capable of moving fluid, such as a pump. The cooling fluid injected from the cooling unit 300 into the injection port 210 moves along the outer flow path 30. While moving along the outer flow path 30, the cooling fluid passes along the cooling flow path through the inlet 22 connected to the outer flow path 30 and is discharged to the outlet 21. The partition 40 is disposed in the outer flow path 30 to restrict flow of the cooling fluid and induce the cooling fluid injected into the outer flow path 30 to flow to the cooling flow path through the inlet 22.

The partition 40 may be located to be adjacent to the injection port 210, and more specifically, an angle between an end portion of the injection port 210 adjacent to the partition 40, among both ends of the injection port 210, and the partition 40 may be determined as angles between 0 to 10 degrees. This is to allow the cooling fluid injected through the injection port 210 to be injected into all the inlets 22 disposed in the core 10, thereby increasing cooling efficiency of the motor according to the present invention. However, even if the partition 40 is disposed to be adjacent to the injection port 210 according to design, there may be a region to which the cooling fluid is not immediately supplied between the partition 40 and the injection port 210. To this end, the housing 200 may further include an auxiliary injection port 220 branched from a main flow path connected to the injection port and connected to the outer flow path 30 between the partition 40 and the injection port 210, so that the cooling fluid may be immediately injected into a portion not covered by the injection port 210 through the auxiliary injection port 220.

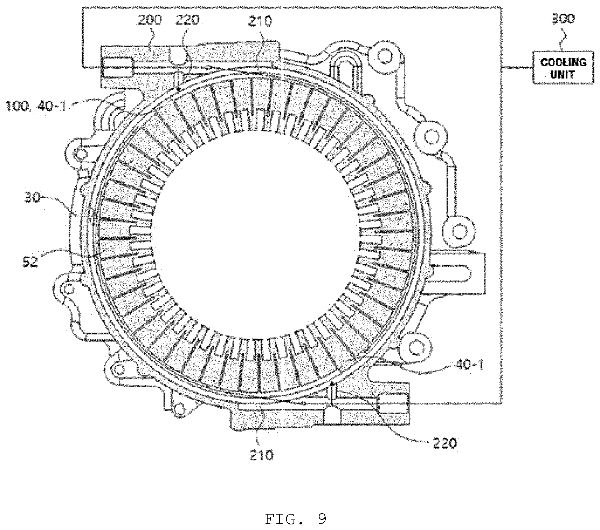

FIG. 9 is a schematic cross-sectional view of a motor according to another embodiment of the present invention.

As shown in FIG. 9, in a motor according to another embodiment of the present invention, two partitions 40 are disposed on the outer flow path 30, and two injection ports 210 are disposed in a position corresponding to the partition 40 on the housing 200. However, in the motor according to the present invention, the number of partitions 40 and injection ports 210 is not limited to two, and the number of partitions 40 and injection ports 210 may be three or more.

As shown in FIG. 9, the partitions 40 are spaced apart from each other by a predetermined distance. More specifically, an angle between two partitions 40 disposed on the outer flow path 30 is 180 degrees, and two partitions 40 are located farthest from each other based on the circumference of the outer flow path 30. This is because the lengths of the outer flow path 30 divided by the partition 40 are the same only when two partitions 40 are located farthest from each other, so that a cooling target becomes uniform by the cooling fluid and the cooling efficiency increases. Two injection ports 210 may also be located to be adjacent to two partitions 40, respectively.

Also, as shown in FIG. 9, the cooling unit 300 may be configured to supply cooling fluid to each of two injection ports 210.

As described above, according to the stator having a cooling flow path and the motor including the same according to various embodiments of the present invention, the flow path, which is disposed on the outer circumferential surface of the related art core, is disposed inside the core, and the flow path is located in a position in which magnetic flux is not saturated, and thus, the outer diameter may be reduced, compared to the related art core.

In addition, according to the present invention, compared to the related art, there is no need for a cooling guide, which is a separate structure, and thus assemblability and economic efficiency may be improved.

In addition, according to the present invention, the position of the cooling flow path may be changed by changing the position of the hole during design, if necessary, so that the cooling portion may be easily adjusted.

The scope is defined by the claims.

## Claims

1. A stator (100) comprising:
a core (10) including a yoke (11) having an annular shape, a teeth extending inwardly from the yoke (11) and radially disposed, and a shoe (13) disposed at an end of each tooth (12); and
a cooling flow path disposed inside the core (10), wherein at least one cooling fluid inlet (22) is disposed along an outer circumferential surface of the core (10), and at least one cooling fluid outlet (21), connected to the at least one cooling fluid inlet (22), is disposed in the teeth in an upper surface of the core (10), wherein an outer flow path (30) recessed in the annular shape, through which cooling fluid is injected and circulated, is disposed in a portion of the outer circumferential surface of the core (10) in which the at least one cooling fluid inlet (22) is disposed, wherein
the core (10) includes two first parts (101) and a second part (102) disposed between the two first parts (101), each of two first parts (101) is disposed by stacking a plurality of first steel plates in which holes (21-1) are disposed at positions corresponding to the at least one cooling fluid outlet (21),
the second part (102) has a groove (22-1) disposed in a position corresponding to the at least one cooling fluid inlet (22) and is disposed by stacking a plurality of second steel plates having a diameter less than a diameter of the first steel plate, and
the groove (22-1) is disposed from a position corresponding to the at least one cooling fluid outlet (21) to a position corresponding to the outer circumferential surface of the core (10), wherein the cooling fluid discharged through the cooling fluid outlet (21) is directly sprayed to the coil to contact the coil to directly cool the coil.

2. The stator (100) of claim 1 , further comprising:
a partition disposed in the outer flow path (30) to block a portion of the outer flow (30) path and limiting a flow direction of the cooling fluid in the outer flow path (30).

3. The stator (100) of claim 2, wherein
the core (10) includes two first parts (101) and a second part (102) disposed between the first parts (101),
each of the two first parts (101) is disposed by stacking a plurality of first steel plates in which holes (21-1) are disposed at positions corresponding to the at least one cooling fluid outlet (21),
the second part (102) has a groove (22-1) disposed in a position corresponding to the at least one cooling fluid inlet (22) and is disposed by stacking a plurality of second steel plates having a diameter less than a diameter of the first steel plate,
a portion of an outer surface of the second steel plate corresponding to the partition protrudes, and
the groove (22-1) is disposed from a position corresponding to the at least one cooling fluid outlet (21) to a position corresponding to the outer circumferential surface of the core (10).

4. The stator (100) of any one of claims 1 to 3, wherein
each tooth (12) has a width decreasing inwardly, and
a width of a portion in which the at least one cooling fluid outlet (21) is disposed is equal to or greater than a sum of the width of the at least one cooling fluid outlet (21) and the width of an inner end of the tooth (12).

5. A motor comprising:
the stator (100) of claim 1;
a housing having an injection port for cooling fluid connected to an outer flow path (30) disposed on the outer circumferential surface of the core (10) of the stator (100); and
a cooling unit configured to inject the cooling fluid into the injection port.

6. The motor of claim 5, wherein
the stator (100) includes a partition disposed in the outer flow path (30) to limit a flow direction of a cooling water in the outer flow path (30),
wherein the partition is disposed in a position adjacent to the injection port in the outer flow path (30).

7. The motor of claim 6, wherein
the housing further includes:
a main flow path to which the injection port and the cooling unit are connected; and
an auxiliary injection port branched from the main flow path and connected to an outer flow path (30) between the partition and the injection port, among both ends of the injection port.

8. The motor of any one of claims 6 to 7, wherein
the stator (100) includes a partition disposed in the outer flow path (30) to limit a flow direction of the cooling water in the outer flow path (30),
a plurality of partitions are disposed in positions spaced apart from each other by a predetermined distance to divide the outer flow path (30) into a plurality of flow paths, and the injection port is disposed in a number corresponding to the number of the partitions, and the injection ports are disposed in positions adjacent to the partitions, respectively.

9. The motor of claim 8, wherein
an angle between two adjacent partitions of the plurality of partitions is 360/n degrees, wherein the n represents the number of the plurality of partitions.

10. The motor of any one of claims 5 to 9, wherein
each tooth (12) has a width decreasing inwardly, and
a width of a portion in which the at least one cooling fluid outlet (21) is disposed is equal to or greater than a sum of the width of the at least one cooling fluid outlet (21) and the width of an inner end of the tooth (12).

## Patentansprüche

1. Stator (100) umfassend:
einen Kern (10) mit einem Joch (11), der eine ringförmige Form aufweist, Zähnen, die sich vom Joch (11) nach innen erstrecken und radial angeordnet sind, und einem Polschuh (13), der an einem Ende jedes Zahns (12) angeordnet ist; und
einen Kühlströmungsweg, der im Inneren des Kerns (10) angeordnet ist, wobei mindestens ein Kühlflüssigkeitseinlass (22) entlang einer Außenumfangsfläche des Kerns (10) angeordnet ist und mindestens ein Kühlflüssigkeitsauslass (21), der mit dem mindestens einen Kühlflüssigkeitseinlass (22) verbunden ist, in den Zähnen auf einer Oberseite des Kerns (10) angeordnet ist, ein in der ringförmigen Form vertiefter, äußerer Strömungsweg (30), durch den Kühlflüssigkeit eingespritzt und zirkuliert wird, in einem Abschnitt der Außenumfangsfläche des Kerns (10) angeordnet ist, in dem der mindestens eine Kühlflüssigkeitseinlass (22) angeordnet ist, wobei
der Kern (10) zwei erste Teile (101) und einen zwischen den zwei ersten Teilen (101) angeordneten zweiten Teil (102) umfasst, wobei jeder der zwei ersten Teile (101) durch Stapeln einer Mehrzahl erster Stahlplatten angeordnet ist, in denen Löcher (21-1) an Positionen angeordnet sind, die dem mindestens einen Kühlflüssigkeitsauslass (21) entsprechen,
der zweite Teil (102) eine Nut (22-1) aufweist, die in einer Position angeordnet ist, die dem mindestens einen Kühlflüssigkeitseinlass (22) entspricht, und durch Stapeln einer Mehrzahl zweiter Stahlplatten mit einem kleineren Durchmesser als ein Durchmesser der ersten Stahlplatte angeordnet ist;
die Nut (22-1) von einer Position, die dem mindestens einen Kühlflüssigkeitsauslass (21) entspricht, bis zu einer Position angeordnet ist, die der Außenumfangsfläche des Kerns (10) entspricht, wobei die durch den Kühlflüssigkeitsauslass (21) austretende Kühlflüssigkeit direkt auf die Spule gesprüht wird, um mit dieser zum direkten Kühlen der Spule in Kontakt zu treten.

2. Stator (100) nach Anspruch 1, weiterhin umfassend:
eine Trennwand, die im äußeren Strömungsweg (30) angeordnet ist, um einen Abschnitt des äußeren Strömungswegs (30) zu blockieren und eine Strömungsrichtung der Kühlflüssigkeit im äußeren Strömungsweg (30) zu begrenzen.

3. Stator (100) nach Anspruch 2, wobei
der Kern (10) zwei erste Teile (101) und einen zwischen den ersten Teilen (101) angeordneten zweiten Teil (102) umfasst,
jeder der zwei ersten Teile (101) durch Stapeln einer Mehrzahl erster Stahlplatten angeordnet ist, in denen Löcher (21-1) an Positionen angeordnet sind, die dem mindestens einen Kühlflüssigkeitsauslass (21) entsprechen;
der zweite Teil (102) eine Nut (22-1) aufweist, die an einer Position angeordnet ist, die dem mindestens einen Kühlflüssigkeitseinlass (22) entspricht, und durch Stapeln einer Mehrzahl zweiter Stahlplatten angeordnet ist, die einen Durchmesser aufweisen, der kleiner ist als der Durchmesser der ersten Stahlplatte;
ein Abschnitt einer Außenfläche der zweiten Stahlplatte, der der Trennwand entspricht, hervorragt;
die Nut (22-1) von einer Position, die dem mindestens einen Kühlflüssigkeitsauslass (21) entspricht, bis zu einer Position, die der Außenumfangsfläche des Kerns (10) entspricht, angeordnet ist.

4. Stator (100) nach einem der Ansprüche 1 bis 3, wobei
jeder Zahn (12) eine nach innen abnehmende Breite aufweist und
eine Breite eines Abschnitts, in dem der mindestens eine Kühlflüssigkeitsauslass (21) angeordnet ist, gleich oder größer ist als eine Summe aus der Breite des mindestens einen Kühlflüssigkeitsauslasses (21) und der Breite eines inneren Endes des Zahns (12).

5. Motor, umfassend:
den Stator (100) nach Anspruch 1;
ein Gehäuse mit einer Einspritzöffnung für Kühlflüssigkeit, die mit einem äußeren Strömungsweg (30) verbunden ist, der an der Außenumfangsfläche des Kerns (10) des Stators (100) angeordnet ist; und
eine Kühleinheit, die dazu eingerichtet ist, die Kühlflüssigkeit in die Einspritzöffnung einzuspritzen.

6. Motor nach Anspruch 5, wobei
der Stator (100) eine Trennwand umfasst, die im äußeren Strömungsweg (30) angeordnet ist, um eine Strömungsrichtung einer Kühlflüssigkeit im äußeren Strömungsweg (30) zu begrenzen;
wobei die Trennwand in einer Position neben der Einspritzöffnung im äußeren Strömungsweg (30) angeordnet ist.

7. Motor nach Anspruch 6, wobei
das Gehäuse ferner Folgendes umfasst:
einen Hauptströmungsweg, mit dem die Einspritzöffnung und die Kühleinheit verbunden sind; und
eine zusätzliche Einspritzöffnung, die vom Hauptströmungsweg abzweigt und zwischen der Trennwand und der Einspritzöffnung an einem von beiden Enden der Einspritzöffnung mit einem äußeren Strömungsweg (30) verbunden ist.

8. Motor nach einem der Ansprüche 6 bis 7, wobei
der Stator (100) eine Trennwand umfasst, die im äußeren Strömungsweg (30) angeordnet ist, um eine Strömungsrichtung der Kühlflüssigkeit im äußeren Strömungsweg (30) zu begrenzen;
eine Mehrzahl von Trennwänden in Positionen angeordnet ist, die in einem vorgegebenen Abstand voneinander beabstandet sind, um den äußeren Strömungsweg (30) in eine Mehrzahl von Strömungswegen zu unterteilen, und die Einspritzöffnung in einer Anzahl angeordnet ist, die der Anzahl der Trennwände entspricht, und die Einspritzöffnungen jeweils in den Positionen neben den Trennwänden angeordnet sind.

9. Motor nach Anspruch 8, wobei
ein Winkel zwischen zwei benachbarten Trennwänden der Mehrzahl von Trennwänden 360/n Grad beträgt, wobei n die Anzahl der Mehrzahl von Trennwänden darstellt.

10. Motor nach einem der Ansprüche 5 bis 9, wobei
jeder Zahn (12) eine nach innen abnehmende Breite aufweist und
eine Breite eines Abschnitts, in dem der mindestens eine Kühlflüssigkeitsauslass (21) angeordnet ist, gleich oder größer ist als eine Summe aus der Breite des mindestens einen Kühlflüssigkeitsauslasses (21) und der Breite eines inneren Endes des Zahns (12).

## Revendications

1. Stator (100) comprenant:
un noyau (10) comprenant une culasse (11) de forme annulaire, des dents partant vers l'intérieur à partir de la culasse (11) et disposées radialement, et un patin (13) disposé à une extrémité de chaque dent (12); et
un circuit de refroidissement disposé à l'intérieur du noyau (10), dans lequel au moins une entrée de liquide de refroidissement (22) est disposée le long d'une surface circonférentielle externe du noyau (10), et au moins une sortie de liquide de refroidissement (21), reliée à l'au moins une entrée de liquide de refroidissement (22), est disposée dans les dents d'une surface supérieure du noyau (10), dans lequel un chemin d'écoulement extérieur (30) en retrait dans la forme annulaire, à travers lequel est injecté et circule le liquide de refroidissement, est disposé dans une partie de la surface circonférentielle extérieure du noyau (10) dans laquelle est disposée au moins une entrée de liquide de refroidissement (22), dans lequel
le noyau (10) comprend deux premières parties (101) et une deuxième partie (102) disposée entre les deux premières parties (101), chacune des deux premières parties (101) est disposée par empilement d'une pluralité de premières plaques d'acier dans lesquelles des trous (21-1) sont pratiqués à des positions correspondant à l'au moins une sortie de liquide de refroidissement (21),
la deuxième partie (102) comporte une rainure (22-1) pratiquée dans une position correspondant à l'au moins une entrée de liquide de refroidissement (22) et est disposée par empilement d'une pluralité de deuxièmes plaques d'acier ayant un diamètre inférieur au diamètre de la première plaque d'acier, et
la rainure (22-1) est disposée depuis une position correspondant à l'au moins une sortie de liquide de refroidissement (21) jusqu'à une position correspondant à la surface circonférentielle extérieure du noyau (10), le liquide de refroidissement évacué par la sortie de liquide de refroidissement (21) étant directement pulvérisé sur la bobine afin d'entrer en contact avec la bobine et de refroidir directement la bobine.

2. Stator (100) selon la revendication 1, comprenant en outre:
une cloison disposée dans le chemin d'écoulement extérieur (30) pour bloquer une partie du chemin d'écoulement extérieur (30) et limiter un sens d'écoulement du liquide de refroidissement dans le chemin d'écoulement extérieur (30).

3. Stator (100) selon la revendication 2, dans lequel
le noyau (10) comprend deux premières parties (101) et une deuxième partie (102) disposée entre les premières parties (101),
chacune des deux premières parties (101) est disposée par empilement d'une pluralité de premières plaques d'acier dans lesquelles des trous (21-1) sont disposés à des positions correspondant à l'au moins une sortie de liquide de refroidissement (21),
la deuxième partie (102) comporte une rainure (22-1) disposée dans une position correspondant à l'au moins une entrée de liquide de refroidissement (22) et est disposée par empilement d'une pluralité de deuxièmes plaques d'acier ayant un diamètre inférieur au diamètre de la première plaque d'acier,
une partie de la surface extérieure de la deuxième plaque d'acier correspondant à la cloison fait saillie, et
la rainure (22-1) est disposée depuis une position correspondant à l'au moins une sortie de liquide de refroidissement (21) jusqu'à une position correspondant à la surface circonférentielle extérieure du noyau (10).

4. Stator (100) selon l'une quelconque des revendications 1 à 3, dans lequel chaque dent (12) présente une largeur décroissante vers l'intérieur, et
la largeur d'une partie dans laquelle est disposée l'au moins une sortie de liquide de refroidissement (21) est supérieure ou égale à la somme de la largeur de l'au moins une sortie de liquide de refroidissement (21) et de la largeur d'une extrémité intérieure de la dent (12).

5. Moteur comprenant:
le stator (100) selon la revendication 1;
un boîtier comportant un orifice d'injection pour le liquide de refroidissement relié à un chemin d'écoulement extérieur (30) disposé sur la surface circonférentielle extérieure du noyau (10) du stator (100); et
une unité de refroidissement conçue pour injecter le liquide de refroidissement dans l'orifice d'injection.

6. Moteur selon la revendication 5, dans lequel
le stator (100) comprend une cloison disposée dans le chemin d'écoulement extérieur (30) afin de limiter le sens d'écoulement de l'eau de refroidissement dans le chemin d'écoulement extérieur (30),
dans lequel la cloison est disposée dans une position adjacente à l'orifice d'injection dans le chemin d'écoulement extérieur (30).

7. Moteur selon la revendication 6, dans lequel
le boîtier comprenant en outre:
un circuit principal auquel sont raccordés l'orifice d'injection et l'unité de refroidissement; et
un orifice d'injection auxiliaire dérivé du trajet d'écoulement principal et relié à un trajet d'écoulement extérieur (30) entre la cloison et l'orifice d'injection, entre les deux extrémités de l'orifice d'injection.

8. Moteur selon l'une quelconque des revendications 6 à 7, dans lequel
le stator (100) comprend une cloison disposée dans le chemin d'écoulement extérieur (30) afin de limiter un sens d'écoulement de l'eau de refroidissement dans le chemin d'écoulement extérieur (30),
une pluralité de cloisons sont disposées à des positions espacées les unes des autres d'une distance prédéterminée afin de diviser le chemin d'écoulement extérieur (30) en une pluralité de chemins d'écoulement, et le nombre d'orifices d'injection correspondant au nombre de cloisons, et les orifices d'injection sont disposés à des positions adjacentes aux cloisons, respectivement.

9. Moteur selon la revendication 8, dans lequel
l'angle entre deux cloisons adjacentes parmi la pluralité de cloisons est de 360/n degrés, n représentant le nombre de cloisons dans la pluralité de cloisons.

10. Moteur selon l'une quelconque des revendications 5 à 9, dans lequel chaque dent (12) présente une largeur décroissante vers l'intérieur, et
la largeur d'une partie dans laquelle est disposée l'au moins une sortie de liquide de refroidissement (21) est supérieure ou égale à la somme de la largeur de l'au moins une sortie de liquide de refroidissement (21) et de la largeur d'une extrémité intérieure de la dent (12).
